# EUROPEAN PATENT SPECIFICATION

(11) **EP 3 872 712 B1**
(45) Date of publication and mention of the grant of the patent: **02.12.2026**
(21) Application number: 21168984.9
(22) Date of filing: 21.12.2016
(51) Int. Cl.: G06N 3/049, G06N 3/084, G06N 3/0499, G06N 3/09

(54) **RECOGNITION APPARATUS BASED ON NEURAL NETWORK AND METHOD OF TRAINING NEURAL NETWORK**
ERKENNUNGSVORRICHTUNG AUF BASIS EINES NEURONALEN NETZWERKS UND VERFAHREN ZUM TRAINIEREN EINES NEURONALEN NETZWERKS
APPAREIL DE RECONNAISSANCE BASÉ SUR UN RÉSEAU NEURONAL ET PROCÉDÉ DE FORMATION DE RÉSEAU NEURONAL

(30) Priority: 26.01.2016 KR 20160009353
(43) Date of publication of application: 01.09.2021
(62) Document number(s) of the earlier application(s) in accordance with Art. 76 EPC: 16205658.4 / 3 200 130
(73) Proprietor: Samsung Electronics Co., Ltd., Suwon-si, Gyeonggi-do 16677 (KR)
(72) Inventor: LEE, Jun Haeng, 16678 Gyeonggi-do (KR)
(74) Representative: Arnold & Siedsma

(56) References cited:
- US-A1- 2014 143 193
- WANG JINLING ET AL: "An online supervised learning method for spiking neural networks with adaptive structure", NEUROCOMPUTING, ELSEVIER, AMSTERDAM, NL, vol. 144, 29 May 2014 (2014-05-29), pages 526 - 536, XP029045939, ISSN: 0925-2312, DOI: 10.1016/J.NEUCOM.2014.04.017
- "Spiking Neuron Models: Single Neurons, Populations, Plasticity", August 2002, CAMBRIDGE UNIVERSITY PRESS, article WULFRAM GERSTNER ET AL: "4.2 Spike response model (SRM)", XP055380434
- GEOFFREY J. GOODHILL ET AL: "The Role of Weight Normalization in Competitive Learning", NEURAL COMPUTATION., vol. 6, no. 2, March 1994 (1994-03-01), US, pages 255 - 269, XP055380728, ISSN: 0899-7667, DOI: 10.1162/neco.1994.6.2.255
- IOANA SPOREA ET AL: "Supervised learning in multilayer spiking neural networks", NEURAL COMPUTATION, vol. 25, no. 2, 8 January 2013 (2013-01-08), pages 473 - 509, XP055185012, DOI: 10.1162/NECO_a_00396
- JUN HAENG LEE ET AL: "Training Deep Spiking Neural Networks using Backpropagation", ARXIV.ORG, CORNELL UNIVERSITY LIBRARY, 201 OLIN LIBRARY CORNELL UNIVERSITY ITHACA, NY 14853, 31 August 2016 (2016-08-31), XP080723420
- AFSHAR SAEED ET AL: "Turn Down That Noise: Synaptic Encoding of Afferent SNR in a Single Spiking Neuron", IEEE TRANSACTIONS ON BIOMEDICAL CIRCUITS AND SYSTEMS, IEEE, US, vol. 9, no. 2, 22 April 2015 (2015-04-22), pages 188 - 196, XP011579737, ISSN: 1932-4545, [retrieved on 20150429], DOI: 10.1109/TBCAS.2015.2416391

## Description

Methods consistent with exemplary embodiments relate to a method of training a neural network included in a recognition apparatus.

A brain contains hundreds of billions of nerve cells, that is, neurons, and neurons are connected to each other in a complex neural network. A neuron shows an intellectual capability, for example, learning or memory, using synapses that exchange signals with thousands of other neurons. A neuron functions as a structural and functional unit of a nervous system and a basic unit of information transfer. A synapse refers to a junction between neurons and a portion in which an axon of one neuron is connected to a dendrite of another neuron. A single neuron is connected to thousands of other neurons via synapses. A spiking neural network (SNN) with an operating scheme similar to that of a biological brain operates based on events, and accordingly is expected to be better in terms of efficiency. However, there is no method of training a multi-layer deep spiking neural network.

### SUMMARY

The invention is defined by the appended independent claims. Embodiments of the invention are defined by the appended dependent claims.

### BRIEF DESCRIPTION OF THE DRAWINGS

The above and other aspects of exemplary embodiments will become apparent and more readily appreciated from the following detailed description of the exemplary embodiments, taken in conjunction with the accompanying drawings of which:
FIG. 1 is a block diagram illustrating a configuration of a recognition apparatus according to an exemplary embodiment;
FIG. 2 is a diagram illustrating a structure of a neural network according to an exemplary embodiment;
FIG. 3 is a graph illustrating an operating method of a neuron included in a neural network according to an exemplary embodiment;
FIG. 4 is a diagram illustrating a winner-take-all (WTA) structure including synapses and neurons in a neural network according to an exemplary embodiment;
FIG. 5 is a diagram illustrating an operation based on an activation neuron in a WTA structure including synapses and neurons according to an exemplary embodiment;
FIG. 6 is a diagram illustrating a process of performing a training method according to an exemplary embodiment;
FIG. 7 is a flowchart illustrating a training method according to an exemplary embodiment;
FIG. 8 is a flowchart illustrating a scheme of training a neural network in the training method of FIG. 7;
FIG. 9 is a flowchart illustrating a scheme of determining a parameter in the scheme of FIG. 8;
FIG. 10 is a flowchart illustrating a scheme of regulating an input synaptic weight in the scheme of FIG. 9; and
FIG. 11 is a flowchart illustrating a scheme of regulating a membrane potential threshold in the scheme of FIG. 9.

### DETAILED DESCRIPTION

Reference will now be made in detail to exemplary embodiments, examples of which are illustrated in the accompanying drawings, wherein like reference numerals refer to the like elements throughout. Exemplary embodiments are described below to explain the present disclosure by referring to the figures.

Structural or functional descriptions of exemplary embodiments are intended for the purpose of describing exemplary embodiments, and the exemplary embodiments may be implemented in various forms. However, it may be understood that these exemplary embodiments are not construed as limited to the illustrated forms, and include all changes, equivalents or alternatives within the technical idea of the present disclosure.

Although terms of "first" or "second" are used to explain various components, the components are not limited to the terms. These terms may be used only to distinguish one component from another component. For example, a "first" component may be referred to as a "second" component, or similarly, the "second" component may be referred to as the "first" component.

It may be understood that when a component is referred to as being "connected" or "coupled" to another component, it can be directly connected or coupled to the other component, or intervening components may be present.

As used herein, the singular forms are intended to include the plural forms as well, unless the context clearly indicates otherwise. It may be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

In addition, the terms such as "unit," "-er (-or)," and "module" described in the specification refer to an element for performing at least one function or operation, and may be implemented in hardware, software, or the combination of hardware and software.

Unless otherwise defined herein, all terms used herein including technical or scientific terms have the same meanings as those generally understood by one of ordinary skill in the art. Terms defined in dictionaries generally used may be construed to have meanings matching with contextual meanings in the related art and are not to be construed as an ideal or excessively formal meaning unless otherwise defined herein.

In the following description, exemplary embodiments are used to recognize a user or biosignals of the user. Exemplary embodiments may be implemented as various products, for example, personal computers (PC), laptop computers, tablet computers, smartphones, televisions (TVs), smart home appliances, intelligent vehicles, kiosks, or wearable devices. For example, exemplary embodiments may be employed to perform user authentication in a smartphone, a mobile device or a smart home system. Exemplary embodiments may be applied to a payment service through user authentication. Also, exemplary embodiments may be applied to an intelligent vehicle system to perform user authentication and to automatically start.

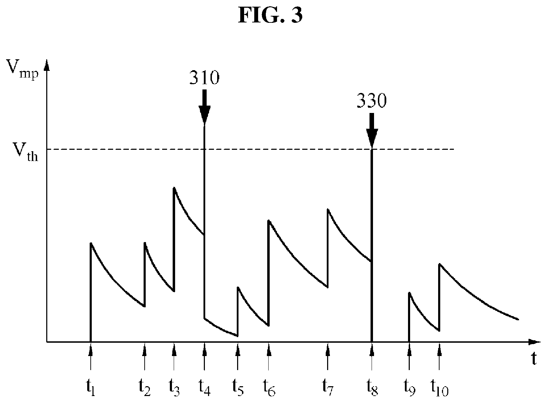

A brain contains hundreds of billions of nerve cells, that is, neurons, and neurons are connected to each other in a complex neural network. A neuron shows an intellectual capability, for example, learning or memory, using synapses that exchange signals with thousands of other neurons. A neuron functions as a structural and functional unit of a nervous system and a basic unit of information transfer. A synapse refers to a junction between neurons and a portion in which an axon of one neuron is connected to a dendrite of another neuron. A single neuron is connected to thousands of other neurons via synapses. A spiking neural network (SNN) with an operating scheme similar to that of a biological brain operates based on events (that is, events are used as input for the SNN), and accordingly is expected to be better in terms of efficiency. However, there is no method of training a multi-layer deep spiking neural network.
In this context, an event may correspond to a stimulus in a biometric system and may be defined by a value and a timestamp. For example, referring to an example similar to FIG. 3, a membrane potential (Vₘₚ) of each neuron in a biological brain may increase when a stimulus is received and may gradually decrease over time. When the membrane potential exceeds Vₜₕ, the neuron may be activated.
On the other hand, an input of a general artificial neural network (ANN) may be defined by only a value. In other words, a general ANN may not reflect a leakage phenomenon in which a membrane potential of a neuron decreases over time, regardless of a timestamp of the input.
In this respect, the SNN has an operating scheme similar to that of a biological brain, in comparison to a general ANN.
In addition, a brain of a higher organism may generally transfer information using a spike signal of a certain form. Since the spike may be generated in a specific condition only, information may be considered to be coded on information about whether a spike signal is present. Similarly, in the SNN, information may be transferred using an event signal. The even signal may be interpreted to have the same meaning as a spike signal of a biological neuron (in terms of a scheme of coding information). On the other hand, in a general ANN, a certain value may be transferred at all times regardless of a condition. Generally, a value transferred in the general ANN may be interpreted as a probability that an event occurs or an event-rate representing events of the SNN on average. In other words, in the general ANN, abstract information may be used instead of a detailed pattern of the event signal. Accordingly, a temporal pattern of the event signal may be lost. Thus, transferring of an event signal may be considered to be similar to a biological brain.
In the SNN, an event may be defined as information transferred to one of connected neurons when another neuron satisfies a specific condition. For example, in the context of an example similar to FIG. 3, an event may occur when Vₘₚ exceeds Vₜₕ. However, other schemes may also be possible. Further, in this context, excellence in terms of efficiency may indicate that a smaller amount of energy is used to perform the same task. Due to a characteristic of an SNN, wherein calculation is performed based on an event, an amount of energy to be used may be closely related with a number of events. In other words, a larger amount of energy may be used in response to the number of events increasing, and a smaller amount of energy may be used in response to the number of events decreasing. Since an even may occur only when a specific condition is satisfied in the SNN, a very small amount of energy may be consumed in response to the number of events decreasing. On the other hand, since values may be transferred at all times to perform an operation in a general ANN, a constant amount of energy may be consumed regardless of a condition of a stimulus. For example, assuming that a certain state is continuously measured using a specific sensor, when a state changes only very occasionally, energy may be intensively used only when the state changes and may rarely be used in the other cases in the SNN. On the other hand, since the same amount of energy may be used regardless of a change in a state in the general ANN, a large amount of energy may be wasted even though the state may not change.

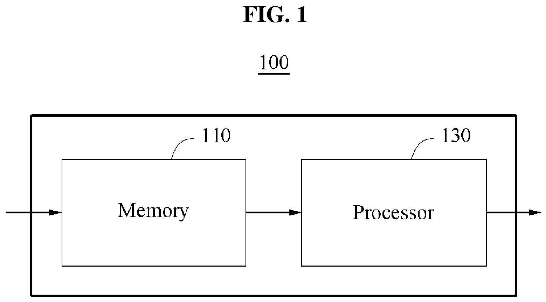

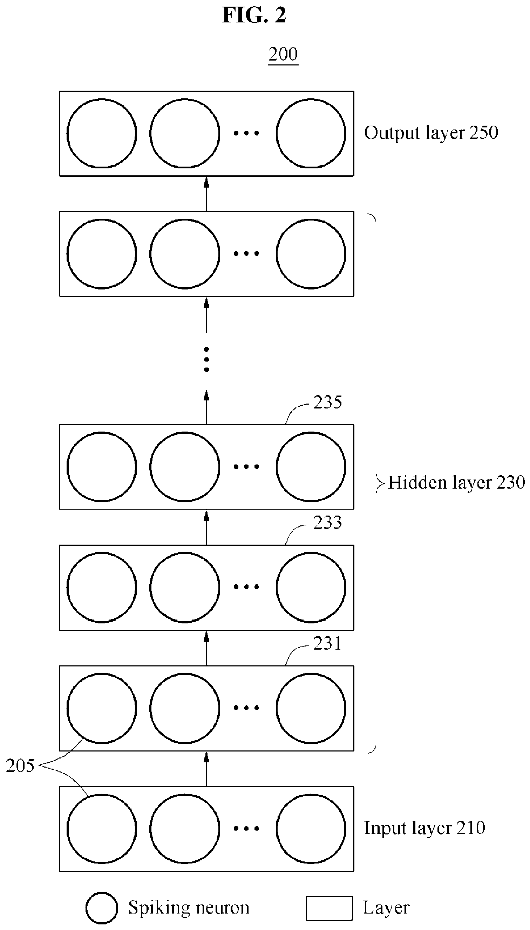

FIG. 1 is a block diagram illustrating a configuration of a recognition apparatus 100 according to an exemplary embodiment. Referring to FIG. 1, the recognition apparatus 100 includes a memory 110 and a processor 130. The recognition apparatus 100 may recognize a user input using a neural network. The neural network may be, for example, an event-based deep neural network or a deep spiking neural network. An example of a structure of the neural network is shown in FIG. 2.

The neural network may include neurons activated based on first synaptic signals and second synaptic signals. A first synaptic signal may refer to a synaptic signal transmitted between two neighboring layers in the neural network. For example, the first synaptic signal may be transmitted from neurons included in a previous layer to a neuron included in a corresponding layer (hereinafter, referred to as a "current layer") or from neurons included in the current layer to neurons included in a next layer. The first synaptic signals may excite or inhibit neurons of the next layer based on a synaptic weight. A second synaptic signal may refer to a synaptic signal input from neurons other than a corresponding neuron in the same layer. The second synaptic signal may inhibit the other neurons. The second synaptic signal may inhibit neurons other than a neuron generating the second synaptic signal in the same group in the current layer, which will be further described below. The second synaptic signal may also be referred to as an "inhibition signal."

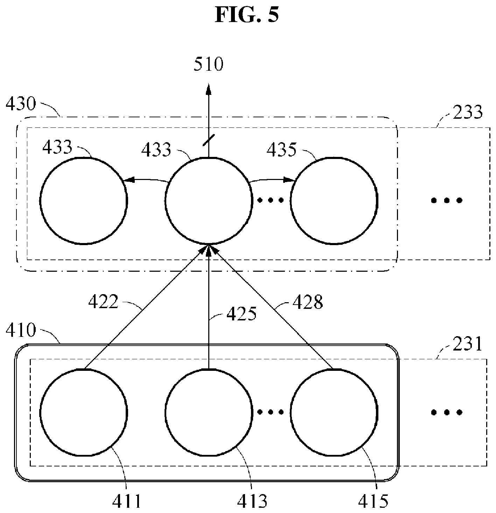

The neural network may have a structure, for example, a winner-take-all (WTA) structure, in which a neuron generating a second synaptic signal outputs a spike signal by inhibiting activation of neurons other than the neuron in the same group or in the same layer based on the second synaptic signal. An example of the WTA structure will be further described with reference to FIG. 5.

The neural network includes an input layer, a hidden layer and an output layer. The input layer may receive input data. The hidden layer may include a plurality of neurons activated based on first synaptic signals input from a previous layer and second synaptic signals input from a current layer. An activation neuron activated based on the first synaptic signals and the second synaptic signals may generate an inhibition signal, and the inhibition signal is transferred to neurons other than the activation neuron in the current layer based on a lateral inhibition coefficient of the activation neuron. The output layer may output a recognition result based on an output of the hidden layer.

The memory 110 may store a neural network that will be described with reference to FIGS. 2, 3, 4 and 5. The memory 110 may be, for example, a volatile memory or a nonvolatile memory. Depending on exemplary embodiments, the neural network may be stored in a remote storage, instead of the memory 110.

The processor 130 may generate a recognition result using the neural network stored in the memory 110. A program code executed by the processor 130 may be stored in the memory 110. The recognition apparatus 100 may be connected to an external device (for example, a PC or a network) via an input/output device, and may exchange data with the external device.

FIG. 2 is a diagram illustrating a structure of a neural network 200 according to an exemplary embodiment. Referring to FIG. 2, the neural network 200 includes a plurality of layers.

The neural network 200 is a spiking neural network. The neural network 200 may include an input layer 210, a hidden layer 230 and an output layer 250. The input layer 210 may receive an input value of the neural network 200. The output layer 250 may output an output value of the neural network 200. The hidden layer 230 may be a layer hidden, that is, unseen from an outside of the neural network 200. The hidden layer 230 may include a plurality of layers, for example, layers 231, 233 and 235. Based on an arrangement order of the layers 231, 233 and 235, the layers 231, 233 and 235 may be referred to as a "previous layer," a "current layer" and a "next layer," respectively.

Each of the input layer 210, the hidden layer 230 and the output layer 250 may include neurons 205. The neurons 205 may be spiking neurons, for example, leaky integrate-and-fire (LIF) neurons.

Neurons of the current layer 233 may output a spike signal (for example, spike signals 310 and 330 of FIG. 3) in a predetermined condition based on first synaptic signals received from neurons of the previous layer 231. Also, the neurons of the current layer 233 may output spike signals based on second synaptic signals received from the other neurons in the current layer 233 in addition to the first synaptic signals. A neuron outputting a spike signal may be referred to as an "activation neuron."

An activation neuron may generate a first synaptic signal and a second synaptic signal. The activation neuron may be, for example, a neuron that outputs a spike signal when a membrane potential of the neuron exceeds a membrane potential threshold. The activation neuron may have an influence on a membrane potential of neurons in another layer through first synaptic signals, and may also have an influence on a membrane potential of neurons other than the activation neuron in the current layer through second synaptic signals.

A second synaptic signal is transferred to the other neurons based on a lateral inhibition coefficient of the activation neuron. For example, a layer may include at least one group. In this example, a second synaptic signal generated by an activation neuron in a group may be transferred to the other neurons in the group. When the second synaptic signal is received to the other neurons, the other neurons may reduce a membrane potential based on a lateral inhibition coefficient and a membrane potential threshold of the other neurons. Lateral inhibition coefficients between the activation neuron and the other neurons may be set to be the same or different from each other.
In other words, first synaptic signals may be transmitted from an inter-layer and second synaptic signals may be transmitted from an intra-layer. Thus, a current layer may receive first synaptic signals from activation neurons in a previous layer, and an activation neuron in the current layer may generate a first synaptic signal that is to be transmitted to a next layer.
An operating method of a neuron and an activation neuron will be further described with reference to FIG. 3.

FIG. 3 is a graph illustrating an operating method of a neuron included in a neural network according to an exemplary embodiment. FIG. 3 illustrates an example of an operation of a neuron included in the neural network. In the graph of FIG. 3, an X axis represents a time t at which first synaptic signals are input, and a Y axis represents a membrane potential of the neuron.

The neuron may receive first synaptic signals received from a previous layer to a current layer. The first synaptic signals may be input over time. For example, the neuron may receive a first synaptic signal input at a time t₁. A membrane potential of the neuron receiving the first synaptic signal may have a predetermined value, and may be denoted by *Vₘₚ.* The membrane potential of the neuron may change based on a weight (for example, denoted by *wᵢ* in Equation 1) of synapses corresponding to the first synaptic signals. The weight of the synapses corresponding to the first synaptic signals may be understood as a weight of each of synapses in which the first synaptic signals are received.

For example, when a first synaptic signal does not exist, that is, when the first synaptic signal is not input, the membrane potential of the neuron may be reduced at a predetermined rate over time. The membrane potential of the neuron may be reduced at a rate of a membrane potential time constant (for example, denoted by *τₘₚ* in Equation 1) of the neuron. Neurons may have different membrane potential time constant values, respectively.

The above-described operation of the neuron may be represented as shown in Equation 1 below. [Equation 1] ${V}_{mp} \left({t}_{n}\right) = {V}_{mp} \left({t}_{n - 1}\right) {e}^{\frac{{t}_{n - 1} - {t}_{n}}{{τ}_{mp}}} + {w}_{i}^{\left(n\right)}$

In Equation 1, *t*_{*n*-1} denotes an input time at which a synaptic signal is previously input, *tₙ* denotes a current time at which a synaptic signal is input, and ${w}_{i}^{\left(n\right)}$ denotes an i-th synaptic weight at an n-th input time for a synaptic signal. Also, *Vₘₚ* denotes the membrane potential of the neuron, and *τₘₚ* denotes the membrane potential time constant of the neuron.

In neurons receiving the same input, an exponential decay term ${e}^{\frac{{t}_{n - 1} - {t}_{n}}{{τ}_{mp}}}$ of Equation 1 may have the same value. For example, a membrane potential of neurons in the same group sharing a receptive field may be calculated based on the same exponential decay term. In other words, the exponential decay term may be calculated once, and may be applied without a change to calculate a membrane potential of another neuron. Thus, a calculation amount may be significantly reduced when a membrane potential of neurons is updated over time.

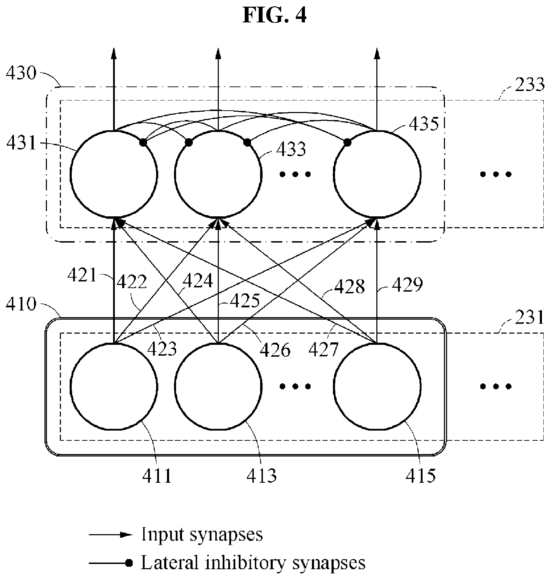

When a second synaptic signal is received, a membrane potential of a neuron may be reduced based on a lateral inhibition coefficient. A WTA structure based on a lateral inhibition coefficient will be described with reference to FIG. 4.

For example, first synaptic signals are input at times t₂, t₃ and t₄ over time. In this example, when the membrane potential of the neuron exceeds a membrane potential threshold, for example, Vₜₕ of the neuron at the time t₄, the neuron may output the spike signal 310.

When the spike signal 310 is output, the membrane potential of the neuron, that is, an activation neuron may be reduced based on a predetermined scheme. The scheme may include, for example, a scheme of reducing the membrane potential of the activation neuron by a value that is in proportion to the membrane potential threshold of the activation neuron, and a scheme of reducing the membrane potential of the activation neuron by a preset rate that is in proportion to the membrane potential threshold of the activation neuron.

The membrane potential of the activation neuron may be reduced as shown in Equation 2 below. [Equation 2] ${V}_{mp} \left({t}_{n}^{+}\right) = {V}_{mp} \left({t}_{n}\right) - {γV}_{th}$ *with* an *output spike if Vₘₚ*(*tₙ*) = *Vₜₕ*.

In Equation 2, ${V}_{mp} \left({t}_{n}^{+}\right)$ denotes a membrane potential of a neuron after a time ${t}_{n}^{+}$ at which a spike signal is output. Also, *Vₜₕ* denotes a membrane potential threshold of the neuron, and *γ* denotes a membrane potential reset factor. The membrane potential reset factor *γ* may have, for example, a value between "0" and "1."

The membrane potential of the neuron reduced based on the scheme may exceed the membrane potential threshold Vₜₕ again by first synaptic signals input at times t₅, t₆, t₇ and t₈. The neuron may output the spike signal 330 at the time t₈.

The membrane potential of the neuron may be clamped based on a range (for example, -Vₜₕ < Vₘₚ < Vₜₕ) set based on the membrane potential threshold of neurons.

For example, a membrane potential time constant value of a neuron may be changed based on a result of a comparison between a magnitude of input signals input to the neural network and a preset reference value.

In an example, when the magnitude of the input signals is less than a preset first reference value, a recognition apparatus may increase a membrane potential time constant value of neurons in the neural network. When the membrane potential time constant value of the neurons increases, a membrane potential of the neurons may gradually decrease. Thus, it is possible to control voltage of the neurons to be efficiently integrated.

In another example, when the magnitude of the input signals is greater than a preset second reference value, the recognition apparatus may reduce a membrane potential time constant value of neurons included in a first hidden layer. When the membrane potential time constant value of the neurons in the first hidden layer is reduced, a membrane potential of the neurons in the first hidden layer may quickly decrease. Thus, the first hidden layer may be used as a filtering layer. For example, the input signals may be filtered in the first hidden layer. The second reference value may be greater than the first reference value.

FIG. 4 is a diagram illustrating a WTA structure including synapses and neurons in a neural network according to an exemplary embodiment. FIG. 4 illustrates the previous layer 231 and the current layer 233 in the neural network 200 of FIG. 2.

The current layer 233 may include at least one group, for example, a group 430 including a portion of neurons included in the current layer 233.

Neurons 431, 433 and 435 included in the group 430 may share a receptive field 410 belonging to the previous layer 231. The receptive field 410 may be understood as a set of neurons that provide synaptic signals to the neurons 431, 433 and 435 in the group 430 among a plurality of neurons included in the previous layer 231.

Each of neurons 411, 413 and 415 included in the receptive field 410 may be connected to all the neurons 431, 433 and 435 included in the group 430 corresponding to the receptive field 410 via input synapses 421, 422, 423, 424, 425, 426, 427, 428 and 429. For example, the neuron 411 may be connected to the neurons 431, 433 and 435 via the synapses 421, 422 and 423. The neuron 413 may be connected to the neurons 431, 433 and 435 via the synapses 424, 425 and 426. Also, the neuron 415 may be connected to the neurons 431, 433 and 435 via the synapses 427, 428 and 429.

The neurons 431, 433 and 435 may receive first synaptic signals from the neurons 411, 413 and 415 via the synapses 421 through 429.

An activation neuron among the neurons 431, 433 and 435 in the same group, that is, the group 430 may generate a second synaptic signal to inhibit the other neurons in the current layer 233 or in the group 430. For example, when the neuron 431 is an activation neuron, the neuron 431 may generate a second synaptic signal to inhibit the neurons 433 and 435 via lateral inhibitory synapses. When the neuron 433 is an activation neuron, the neuron 433 may generate a second synaptic signal to inhibit the neurons 431 and 435 via the lateral inhibitory synapses. When the neuron 435 is an activation neuron, the neuron 435 may generate a second synaptic signal to inhibit the neurons 431 and 433 via the lateral inhibitory synapses.

The activation neuron may adjust a membrane potential of the other neurons in the group 430, based on the second synaptic signal.

FIG. 5 is a diagram illustrating an operation based on an activation neuron in a WTA structure including synapses and neurons according to an exemplary embodiment. Hereinafter, for convenience of description, an operation between neurons and synapses based on the neuron 433 assumed as an activation neuron is described.

For example, the neuron 433 among the neurons 431, 433 and 435 included in the same group, for example, the group 430 may receive first synaptic signals corresponding to the synapses 422, 425 and 428 from the neurons 411, 413 and 415 included in the receptive field 410. When a membrane potential of the neuron 433 exceeds a membrane potential threshold of the neuron 433 by the first synaptic signals, the neuron 433 may be an activation neuron. The neuron 433 may output a spike signal 510. The spike signal 510 may be transferred to a plurality of neurons of a next layer.

Also, the neuron 433 may generate a second synaptic signal to inhibit the other neurons, that is, neurons 431 and 435 in the group 430. The second synaptic signal may be transferred to the neurons 431 and 435 based on, for example, a lateral inhibition coefficient of the neuron 433.

When the second synaptic signal is received from the neuron 433, the neurons 431 and 435 may reduce a membrane potential of the neurons 431 and 435 based on a membrane potential threshold of the neurons 431 and 435 and the lateral inhibition coefficient of the neuron 433.

In response to the second synaptic signal being received, the neurons 431 and 435 may reduce the membrane potential of the neurons 431 and 435 by an amount that is in proportion to the membrane potential threshold of the neurons 431 and 435 and the lateral inhibition coefficient of the neuron 433, as shown in Equation 3 below. [Equation 3] ${V}_{mp} = {V}_{mp} - {μV}_{th}$

*Vₘₚ* denotes a membrane potential of a neuron, *µ* denotes a lateral inhibition coefficient of a neuron, for example, an activation neuron, and *Vₜₕ* denotes a membrane potential threshold.

Because the neurons 431 and 435 are inhibited by the second synaptic signal, the neuron 433 may have a WTA structure. In the WTA structure, lateral inhibition coefficients between an activation neuron and the other neurons may be set to be the same value or different values.

A value of a lateral inhibition coefficient is determined based on a weight of synapses corresponding to each of neurons. The value of the lateral inhibition coefficient may be set as a fixed value between "0" and "1," or may be optimized through learning, depending on exemplary embodiments.

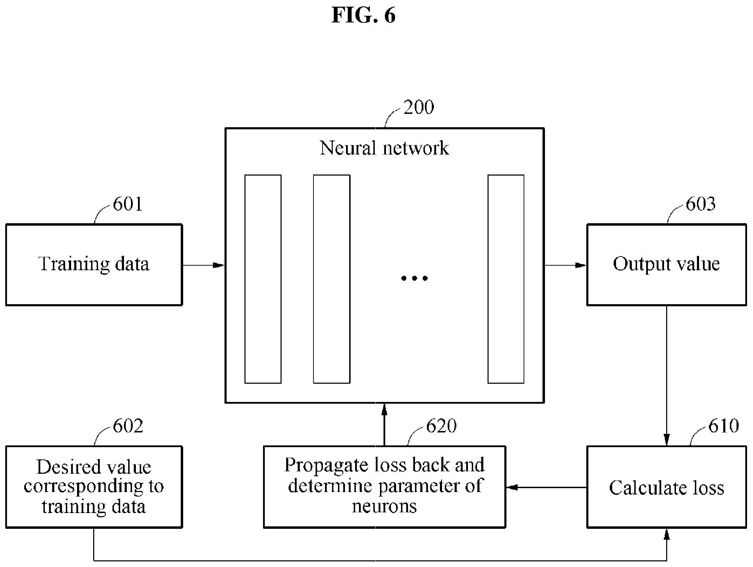

FIG. 6 is a diagram illustrating a process of performing a training method according to an exemplary embodiment. FIG. 6 illustrates a training process performed in the neural network 200 of FIG. 2.

When training data 601 is applied to an input layer of the neural network 200, the neural network 200 outputs an output value 603 corresponding to the training data 601. The training data 601 may be an input value applied to the neural network 200 for training, and may correspond to data known in advance, for example, a label or a desired value corresponding to the training data 601.

According to an exemplary embodiment, because a supervised learning method is used, a desired value 602 corresponding to the training data 601 is known in advance when the training data 601 is applied to the input layer.

In operation 610, a training apparatus calculates a loss by a difference between the output value 603 and the desired value 602 corresponding to the training data 601. In operation 620, the training apparatus propagates the loss calculated in operation 610 back to the neural network 200, and determines a parameter of neurons included in the neural network 200.

The training apparatus may apply next training data to the neural network 200 to which the parameter determined in operation 620 is applied. The training apparatus may recalculate a loss by comparing a new output value to a desired value corresponding to the next training data. The training apparatus may propagate the recalculated loss back to the neural network 200, and may regulate the parameter of the neurons. To optimize a parameter of the neural network 200, the training apparatus may perform a process of operations 610 and 620 iteratively a plurality of times on all training data.

The parameter determined in operation 620 or the optimized parameter may be applied to a neural network of the recognition apparatus described with reference to FIGS. 1 through 5.

For example, a membrane potential time constant of a neuron may be trained. The training apparatus may change a membrane potential time constant value of a neuron included in the neural network 200 based on a result of a comparison between magnitude of input signals (for example, the training data 601) input to the neural network 200 and a preset reference value.

The training apparatus may normalize a backpropagation error occurring when the loss calculated in operation 610 is propagated back to the neural network 200.

For example, the training apparatus may normalize the backpropagation error so that an update value of synaptic weights of neurons in all layers may be maximally the same as an update value of a membrane potential threshold of the neurons in all layers. Through the normalization of the backpropagation error, an update imbalance between the layers may be adjusted.

The update value of the synaptic weights of the neurons and the update value of the membrane potential threshold of the neurons may be obtained based on Equations 4 and 5 below, respectively. [Equation 4] $\frac{E \left[{\sum }_{i , j}^{n , m} Δ {w}_{ij}^{2}\right]}{E \left[{\sum }_{i , j}^{N , M} {w}_{ij}^{2}\right]}$

In Equation 4, *wᵢⱼ* denotes a weight of a synapse input from a neuron j to a neuron i. Δ*wᵢⱼ* denotes an update value of weights. N denotes a number of neurons included in a layer, and M denotes a number of synapses per neuron. Also, n denotes a number of activation neurons included in a layer, and m denotes a number of active synapses of neurons. The active synapses may refer to synapses contributed to a change in a membrane potential by receiving a signal from another neuron. [Equation 5] $\frac{E \left[{\sum }_{i}^{n} Δ {V}_{th , i}^{2}\right]}{E \left[{\sum }_{i}^{N} {V}_{th , i}^{2}\right]}$

In Equation 5, *V_{th,i}* denotes a membrane potential threshold of an i-th neuron. Also, Δ*V_{th,i}* denotes an update value of a membrane potential threshold.

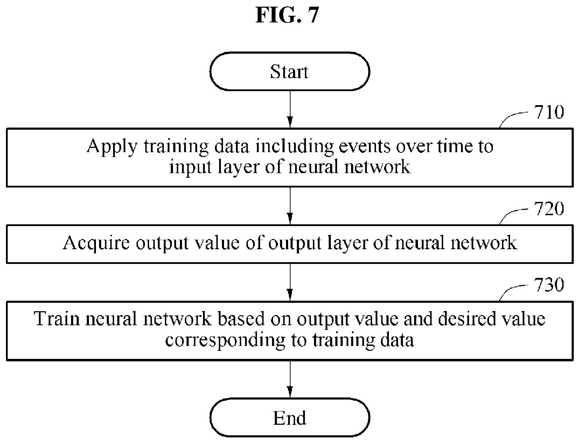

FIG. 7 is a flowchart illustrating a training method according to an exemplary embodiment. Referring to FIG. 7, in operation 710, a training apparatus according to an exemplary embodiment applies training data to an input layer of a neural network. The training data includes events over time. It is to be noted that the notion of "events" has been discussed above.

The neural network may include neurons activated based on input synaptic signals input from a previous layer and a lateral inhibition signal input from a current layer. An activation neuron among the neurons may excite or inhibit neurons of a next layer, and may inhibit neurons other than the activation neuron in the current layer.

In operation 720, the training apparatus acquires an output value of an output layer of the neural network. For example, when the training data applied to the input layer passes through layers of the neural network, the training apparatus may acquire the output value from the output layer. A parameter of the layers of the neural network may be initially set to a default value or may be set.

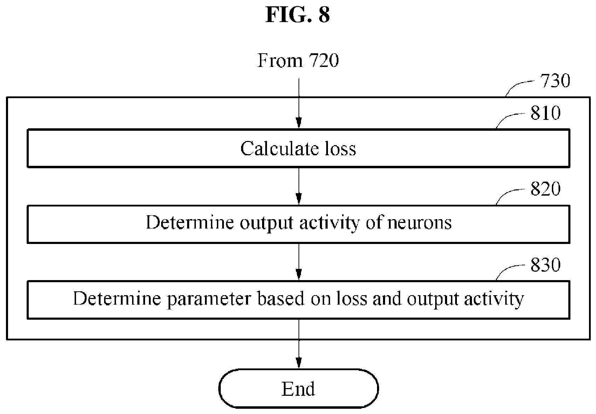

In operation 730, the training apparatus trains the neural network based on the output value and a desired value corresponding to the training data. For example, the training apparatus may determine a parameter of neurons included in the neural network, to train the neural network. The parameter of the neurons may include, for example, a membrane potential threshold of a neuron, input synaptic weights of a neuron, output synaptic weights of a neuron, or a lateral inhibition coefficient of a neuron. A scheme of training the neural network using the training apparatus will be further described with reference to FIG. 8.

FIG. 8 is a flowchart illustrating operation 730 of FIG. 7. Referring to FIG. 8, in operation 810, the training apparatus calculates a loss by a difference between the output value and the desired value corresponding to the training data.

In operation 820, the training apparatus determines an output activity of neurons. For example, the training apparatus may use a membrane potential equilibrium equation to determine the output activity of the neurons. The training apparatus may determine the output activity of the neurons using the membrane potential equilibrium equation, based on the following schemes:

### 1. Example in which a lateral inhibition coefficient of a neuron has a value of "0"

The training apparatus may determine an output activity *a* of a neuron included in a neural network based on, for example, input activities of the neuron, a membrane potential reset factor of the neuron and a membrane potential threshold of the neuron, as shown in Equation 6 below. The output activity *a* of the neuron may be understood as an output value of the neuron. [Equation 6] $s - {γV}_{th} a \approx 0 \to a \approx \frac{s}{{γV}_{th}}$

In Equation 6, s = Σ *wₖxₖ* may be satisfied, *xₖ* denotes an input activity input to a k-th synapse, and *wₖ* denotes a k-th synaptic weight. Also, *γ* denotes a membrane potential reset factor of a neuron, and *Vₜₕ* denotes a membrane potential threshold of the neuron.

### 2. Example in which lateral inhibition coefficients of neurons are the same in a group of a WTA circuit

The training apparatus may adjust an output activity *aᵢ* of an i-th neuron based on, for example, a membrane potential reset factor of a neuron, a lateral inhibition coefficient of the neuron, a lateral discount factor of the neuron, and output activities of the other neurons in the group, as shown in Equation 7 below. [Equation 7] $\begin{matrix}{s}_{i} - {γV}_{th , i} {a}_{i} - {μσV}_{th , i} {\sum }_{j \neq i}^{n} {a}_{j} \approx 0 \\ \to {a}_{i} \approx \frac{{s}_{i}}{{γV}_{th , i}} - \frac{μσ}{γ} {\sum }_{j \neq i}^{n} {a}_{j}\end{matrix}$

In Equation 7, s*ᵢ*= Σ *w_{kᵢ}x_{kᵢ}* may be satisfied, *x_{kᵢ}* denotes an input activity input to a k-th input synapse of the i-th neuron, and *w_{kᵢ}* denotes a synaptic weight of the k-th input synapse of the i-th neuron. *V*_{*th*,*i*} denotes a membrane potential threshold of the i-th neuron, *aᵢ* denotes the output activity of the i-th neuron, and *aⱼ* denotes an output activity of a j-th neuron. Also, *µ* denotes a lateral inhibition coefficient, and *σ* denotes a lateral discount factor.

### 3. Example in which lateral inhibition coefficients of neurons are different from each other in a group of a WTA circuit

The training apparatus may adjust an output activity *aᵢ* of an i-th neuron based on, for example, a membrane potential reset factor of a neuron, a lateral inhibition coefficient of the neuron, a lateral discount factor of the neuron, and output activities of the other neurons in the group, as shown in Equation 8 below. [Equation 8] $\begin{matrix}{s}_{i} - {γV}_{th , i} {a}_{i} + {κ}_{ii} {V}_{th , i} {a}_{i} + {σV}_{th , i} {\sum }_{j \neq i}^{n} {κ}_{ij} {a}_{j} \approx 0 \\ \to {a}_{i} \approx \frac{{s}_{i}}{\left(γ-{κ}_{ii}\right) {V}_{th , i}} + \frac{σ {\sum }_{j \neq i}^{n} {κ}_{ij} {a}_{j}}{\left(γ-{κ}_{ii}\right)}\end{matrix}$

In Equation 8, *κᵢⱼ* denotes a value of a lateral inhibition input from a j-th neuron to the i-th neuron.

### 4. Example in which a value of a lateral inhibition coefficient of a neuron is determined based on input synaptic weights of the neuron

For example, the training apparatus may adjust an output activity of a neuron, as shown in Equation 9 below. [Equation 9] $\begin{matrix}{s}_{i} - {γV}_{th , i} {a}_{i} - {σV}_{th , i} {\sum }_{j \neq i}^{n} {G}_{ij}^{+} {a}_{j} \approx 0 \\ \to {a}_{i} \approx \frac{{s}_{i}}{{γV}_{th , i}} - \frac{σ}{γ} {\sum }_{j \neq i}^{n} {G}_{ij}^{+} {a}_{j}\end{matrix}$

Equation 9 may satisfy ${G}_{ij}^{+} = μ \frac{\left〈max\left(0, {w}_{i}\right),max\left(0, {w}_{j}\right)\right〉}{\left〈max\left(0, {w}_{j}\right),max\left(0, {w}_{j}\right)\right〉}$ or ${G}^{+} = μ \left[\begin{matrix}\frac{1}{{\left|max\left(0, {w}_{1}\right)\right|}^{2}} & ⋯ & 0 \\ ⋮ & ⋱ & ⋮ \\ 0 & ⋯ & \frac{1}{{\left|max\left(0, {w}_{N}\right)\right|}^{2}}\end{matrix}\right] {WW}^{T} .$ In Equation 9, *G*⁺ denotes a matrix including an element ${G}_{ij}^{+}$ at (i, j), and *W* = [*w*₁, ··· , *w_{N}*]. Also, *w*₁ denotes a first synaptic weight, and *w_{N}* denotes an N-th synaptic weight.

In operation 830, the training apparatus determines a parameter of the neurons based on the loss calculated in operation 810 and the output activity determined in operation 820. For example, the training apparatus may determine a parameter of neurons included in the neural network using a loss propagated back to the neural network and a gradient descent scheme that is based on an output activity of the neurons.

The parameter may include, for example, a membrane potential threshold of a neuron, input synaptic weights of the neuron, output synaptic weights of the neuron, or a lateral inhibition coefficient of the neuron. For example, the training apparatus may induce partial differential terms for parameters, for example, $\frac{\partial {a}_{i}}{\partial {s}_{i}} , \frac{\partial {a}_{i}}{\partial {x}_{k}} , \frac{\partial {a}_{i}}{\partial {w}_{ik}} , \frac{\partial {a}_{i}}{\partial {V}_{th , i}} , \frac{\partial {a}_{i}}{\partial {κ}_{ih}}$ from a membrane potential equilibrium equation. The training apparatus may regulate the parameters using the partial differential terms.

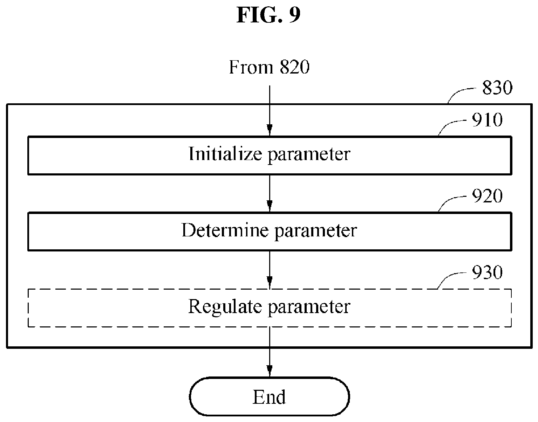

A scheme of determining a parameter of neurons in the training apparatus will be further described with reference to FIG. 9.

FIG. 9 is a flowchart illustrating operation 830 of FIG. 8. Referring to FIG. 9, in operation 910, the training apparatus initializes a parameter of the neural network. For example, the training apparatus may initialize at least one among a membrane potential threshold and synaptic weights of neurons included in a layer of the neural network.

The training apparatus may initialize synaptic weights w of neurons for each of layers included in the neural network based on a number M of synapses corresponding to each of the neurons included in the layer, as shown in Equation 10 below. [Equation 10] $w ∼ Uniform \left[-\sqrt{\frac{3}{M}},\sqrt{\frac{3}{M}}\right]$

Also, the training apparatus may initialize a membrane potential threshold *Vₜₕ* of neurons for each of layers included in the neural network based on the number M of the synapses corresponding to each of the neurons included in the layer, as shown in Equation 11 below. [Equation 11] ${V}_{th} = α \sqrt{\frac{3}{M}} , α > 1$

In Equation 11, *α* denotes an initialization coefficient.

In operation 920, the training apparatus determines the parameter. The training apparatus may determine the synaptic weights and the membrane potential threshold of the neurons included in the layer using the loss calculated in operation 810 and propagated back to the neural network and a gradient descent scheme that is based on the output activity determined in operation 820.

In operation 930, the training apparatus may regulate the parameter. For example, the training apparatus may regulate the input synaptic weights or the membrane potential threshold of the neurons. The training apparatus may selectively perform a process of regulating a parameter.

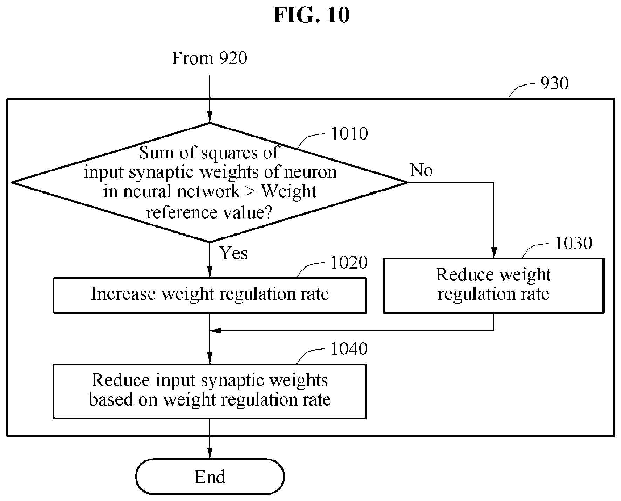

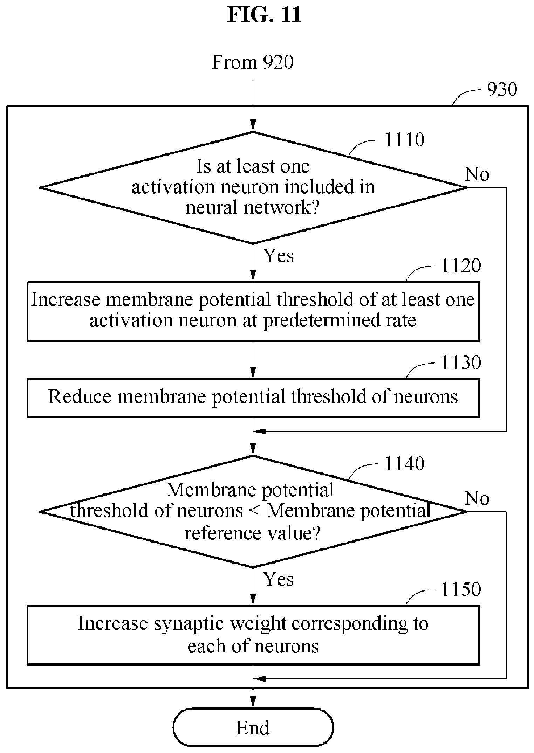

A scheme of regulating the input synaptic weights in the training apparatus, and a scheme of regulating the membrane potential threshold of the neurons in the training apparatus will be further described with reference to FIGS. 10 and 11, respectively.

FIG. 10 is a flowchart illustrating a scheme of regulating the input synaptic weights in operation 930 of FIG. 9. Referring to FIG. 10, the training apparatus may regulate an input synaptic weight to continue to decrease during training.

In operation 1010, the training apparatus compares a sum of squares of input synaptic weights of a neuron included in the neural network to a weight reference value. The weight reference value may be set in advance to "1."

The training apparatus may determine a weight regulation rate based on a comparison result of operation 1010. When the sum of the squares is greater than the weight reference value, the training apparatus increases the weight regulation rate in operation 1020. When the sum of the squares is less than or equal to the weight reference value, the training apparatus reduces the weight regulation rate in operation 1030. In operation 1040, the training apparatus reduces the input synaptic weights based on the weight regulation rate increased in operation 1020 or reduced in operation 1030.

The training apparatus may maintain a sum of squares of input synaptic weights of each of neurons to be close to the weight reference value by increasing the weight reference value in response to the sum of the squares being greater than the weight reference value and by reducing the weight regulation rate in response to the sum of the squares being less than or equal to the weight reference value.

The scheme of regulating the input synaptic weights in FIG. 10 may be represented as shown in Equation 12 below. [Equation 12] ${L}_{w} \left(l, i\right) = {βe}^{λ \left({\sum }_{j} {\left({w}_{ij}^{\left(l\right)}\right)}^{2} - 1\right)} ,$ where ${\sum }_{j} {\left({w}_{ij}^{\left(l\right)}\right)}^{2} \approx 1$ for neuron *i* of layer *l*

In Equation 12, *L_{w}*(*l*, *i*) denotes an objective function or a loss function for weight regularization.

Also, ${\sum }_{j} {\left({w}_{ij}^{\left(l\right)}\right)}^{2}$ denotes a sum of squares of input synaptic weights of a neuron, and may have a value close to "1" for a neuron *i* of a layer *l. λ* and *β* denote parameters to regulate a weight for weight regularization in the entire objective function. Equation 12 may be represented as shown in Equation 13 below. [Equation 13] $\frac{\partial {L}_{w} \left(l\right)}{\partial {w}_{ij}^{\left(l\right)}} = 2 {βλw}_{ij}^{\left(l\right)} {e}^{λ \left({\sum \left({w}_{ij}^{\left(l\right)}\right)}^{2}-1\right)}$

Equation 13 may represent a result obtained by differentiating Equation 12.

FIG. 11 is a flowchart illustrating a scheme of regulating a membrane potential threshold in operation 930 of FIG. 9. Referring to FIG. 11, the training apparatus may regulate a membrane potential threshold of neurons included in the neural network based on whether the neurons are activated.

In operation 1110, the training apparatus determines whether at least one activation neuron is included in the neural network. When the at least one activation neuron is determined not to be included in the neural network in operation 1110, the training apparatus may determine whether the membrane potential threshold of the neurons is less than a preset membrane potential reference value in operation 1140.

When the at least one activation neuron is determined to be included in the neural network in operation 1110, the training apparatus increases a membrane potential threshold of the at least one activation neuron at a predetermined rate (for example, *ρ*) in operation 1120.

In operation 1130, the training apparatus reduces a membrane potential threshold of all the neurons in the neural network. For example, the training apparatus may reduce the membrane potential threshold of the neurons by *ρNw*/*N* based on a number *N* of neurons sharing a receptive field belonging to a previous layer and a number Nw of activation neurons included in the same layer.

The training apparatus may reduce the membrane potential threshold of the neurons by a predetermined value when the activation neuron is fired, that is, when a spike signal is output, to provide a fair chance for optimization to all the neurons in the neural network.

In operation 1140, the training apparatus compares the membrane potential threshold of the neurons to the membrane potential reference value. When the membrane potential threshold is determined to be greater than or equal to the membrane potential reference value in operation 1140, the training apparatus terminates an operation.

When the membrane potential threshold is determined to be less than the membrane potential reference value in operation 1140, the training apparatus increases a synaptic weight corresponding to each of the neurons in operation 1150. For example, when the membrane potential threshold is less than the membrane potential reference value, the training apparatus may increase a synaptic weight corresponding to each of the neurons, instead of reducing the membrane potential threshold. Thus, it is possible to prevent the neurons from being unstable due to an extremely low membrane potential threshold.

The elements or components described herein may be implemented using hardware components, software components, or a combination thereof. For example, a processing device may be implemented using one or more general-purpose or special purpose computers, such as, for example, a processor, a controller and an arithmetic logic unit (ALU), a digital signal processor (DSP), a microcomputer, a field programmable array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The method according to the above-described exemplary embodiments may be recorded in non-transitory computer-readable media including program instructions to implement various operations that may be performed by a computer. The media may also include, alone or in combination with the program instructions, data files, data structures, and the like. The program instructions recorded on the media may be those specially designed and constructed for the purposes of the exemplary embodiments, or they may be of the well-known kind and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The described hardware devices may be configured to act as one or more software modules to perform the operations of the above-described exemplary embodiments, or vice versa.

While this disclosure includes examples, it will be apparent to one of ordinary skill in the art that various changes in form and details may be made in these examples without departing from the scope of the claims.

## Claims

1. A computer-implemented training method of a spiking neural network included in a recognition apparatus to recognize a user input to perform user authentication, comprising:
- applying (710) training data to an input layer (310) of the spiking neural network, the training data comprising as inputs events over time, said events over time being biosignals of the user;
- wherein the spiking neural network comprises the input layer, a hidden layer, and an output layer;
- wherein the output layer is configured to output a recognition result as an output value based on an output of the hidden layer;
- determining an output activity of a spiking neuron included in the spiking neural network based on input activities of the spiking neuron, a membrane potential reset factor of the spiking neuron, and a membrane potential threshold of the spiking neuron;
- acquiring (720) the output value of the output layer (250) of the spiking neural network;
- training (730) the spiking neural network based on the output value and a desired value corresponding to the training data;
- wherein the training is performed in the spiking neural network utilizing supervised learning and comprises:
- calculating a loss by a difference between the output value and the desired value;
- propagating the loss calculated back to the spiking neural network;
- determining a parameter of the spiking neurons included in the spiking neural network based on the loss and based on a gradient descent scheme that is based on an output activity of the spiking neurons, wherein the parameter comprises input synaptic weights of the spiking neurons;
- comparing a sum of squares of input synaptic weights of a spiking neuron included in the spiking neural network to a weight reference value;
- determining a weight regulation rate based on a result of the comparing;
- regulating the parameter of the spiking neurons included in the spiking neural network, said regulating including decreasing the input synaptic weights based on the weight regulation rate;
- wherein the spiking neural network comprises a previous layer (231) of spiking neurons, and a current layer (233) of spiking neurons that are activated based on first synaptic signals and second synaptic signals, the first synaptic signals being input from the previous layer, and the second synaptic signals that are input from the current layer;
- wherein the spiking neurons of the spiking neural network are connected via synapses, and wherein a membrane potential of a spiking neuron among the spiking neurons of the current layer changes based on a weight of the synapses corresponding to the first synaptic signals,
- wherein an activation neuron among the spiking neurons of the current layer outputs a spike signal in response to a membrane potential of the activation neuron exceeding the membrane potential threshold of the activation neuron, and generates a first synaptic signal to excite or inhibit spiking neurons of a next layer (235) and generates a second synaptic signal based on a lateral inhibition coefficient of the activation neuron to inhibit spiking neurons other than the activation neuron in the current layer, a value of the lateral inhibition coefficient of the activation neuron being determined based on the weight of the synapses corresponding to each of the spiking neurons of the current layer.

2. The training method of claim 1, wherein the parameter further comprises at least one among the membrane potential threshold of the spiking neuron, output synaptic weights of the spiking neuron, and a lateral inhibition coefficient of the spiking neuron.

3. The training method of any one of the previous claims, wherein the training further comprises adjusting at least one among: the output activity of the spiking neuron based on the membrane potential reset factor of the spiking neuron, the lateral inhibition coefficient of the spiking neuron, a lateral discount factor of the spiking neuron, and output activities of spiking neurons other than the spiking neuron in a group of spiking neurons.

4. The training method of any one of the previous claims, wherein the training comprises changing a membrane potential time constant value of spiking neurons included in the neural network based on a result of a comparison between a magnitude of the input signals that are input to the neural network and a reference value.

5. The training method of claim 4, wherein the changing comprises increasing the membrane potential time constant value of the spiking neurons in response to the magnitude of the input signals being less than a first reference value; and/or wherein the changing comprises decreasing a membrane potential time constant value of spiking neurons included in a first layer among previous layers of spiking neurons in response to the magnitude of the input signals being greater than a second reference value.

6. The training method of any one of the previous claims, wherein the determining of the weight regulation rate comprises:
- increasing the weight regulation rate in response to the sum of the squares being greater than the weight reference value; and
- decreasing the weight regulation rate in response to the sum of the squares being less than or equal to the weight reference value.

7. The training method of any one of the previous claims, wherein the training comprises regulating a membrane potential threshold of neurons included in the spiking neural network based on whether the spiking neurons are activated.

8. The training method of claim 7, wherein the regulating comprises increasing a membrane potential threshold of an activation neuron among the spiking neurons at a rate.

9. The training method of claim 8, wherein the regulating comprises decreasing a membrane potential threshold of the spiking neurons based on a number of spiking neurons sharing a receptive field in a previous layer of spiking neurons and a number of activation neurons included in the previous layer.

10. The training method of any one of claims 7-9, wherein the regulating comprises increasing a synaptic weight corresponding to each of spiking neurons included in the spiking neural network in response to a membrane potential threshold of the spiking neurons being less than a membrane potential reference value.

11. The training method of any one of the previous claims, wherein the training comprises initializing at least one among a membrane potential threshold and synaptic weights of spiking neurons included in a layer of the spiking neural network based on a number of synapses corresponding to each of the spiking neurons.

12. The training method of any one of the previous claims, wherein the training comprises normalizing a backpropagation error so that an update value of synaptic weights of spiking neurons included in the spiking neural network is equal to an update value of a membrane potential threshold of the spiking neurons, said backpropagation error occurring when the loss calculated is propagated back to the spiking neural network.

13. A non-transitory computer-readable storage medium storing a program comprising instructions which, when executed by a processor, cause the processor to perform the computer-implemented training method of any one of the previous claims.

## Patentansprüche

1. Computerimplementiertes Trainingsverfahren für ein spikendes neuronales Netzwerk, das in einer Erkennungsvorrichtung zur Erkennung einer Benutzereingabe zur Durchführung einer Benutzerauthentifizierung enthalten ist, umfassend:
- Anwenden (710) von Trainingsdaten auf eine Eingangsschicht (310) des spikenden neuronalen Netzwerks, wobei die Trainingsdaten als Eingaben Ereignisse im Zeitverlauf umfassen, wobei es sich bei den Ereignissen im Zeitverlauf um Biosignale des Benutzers handelt;
- wobei das spikende neuronale Netzwerk die Eingangsschicht, eine verborgene Schicht und eine Ausgangsschicht aufweist;
- wobei die Ausgangsschicht so konfiguriert ist, dass sie ein Erkennungsergebnis als Ausgangswert auf der Grundlage einer Ausgabe der verborgenen Schicht ausgibt;
- Bestimmen einer Ausgabeaktivität eines in dem spikenden neuronalen Netzwerk enthaltenen spikenden Neurons auf der Grundlage von Eingabeaktivitäten des spikenden Neurons, eines Membranpotential-Reset-Faktors des spikenden Neurons und eines Membranpotentialschwellenwerts des spikenden Neurons;
- Erfassen (720) des Ausgangswerts der Ausgangsschicht (250) des spikenden neuronalen Netzwerks;
- Trainieren (730) des spikenden neuronalen Netzwerks auf der Grundlage des Ausgangswerts und eines den Trainingsdaten entsprechenden Sollwerts;
- wobei das Trainieren in dem spikenden neuronalen Netzwerk unter Verwendung von überwachtem Lernen durchgeführt wird und Folgendes umfasst:
- Berechnen eines Verlusts anhand der Differenz zwischen dem Ausgangswert und dem Sollwert;
- Rückpropagieren des berechneten Verlusts in das spikende neuronale Netzwerk;
- Bestimmen eines Parameters der in dem spikenden neuronalen Netzwerk enthaltenen spikenden Neuronen auf der Grundlage des Verlusts und auf der Grundlage eines Gradientenabstiegsverfahrens, das auf einer Ausgabeaktivität der spikenden Neuronen basiert, wobei der Parameter synaptische Eingangsgewichte der spikenden Neuronen umfasst;
- Vergleichen einer Quadratsumme der synaptischen Eingangsgewichte eines in dem neuronalen Netzwerk enthaltenen spikenden Neurons mit einem Gewichtsreferenzwert;
- Bestimmen einer Gewichtsregulierungsrate auf der Grundlage eines Ergebnisses des Vergleichs; und
- Regulieren des Parameters der in dem spikenden neuronalen Netzwerk enthaltenen spikenden Neuronen, wobei die Regulierung das Verringern der synaptischen Eingangsgewichte auf der Grundlage der Gewichtsregulierungsrate umfasst;
- wobei das spikende neuronale Netzwerk eine vorhergehende Schicht (231) von spikenden Neuronen und eine aktuelle Schicht (233) von spikenden Neuronen umfasst, die auf der Grundlage von ersten synaptischen Signalen und zweiten synaptischen Signalen aktiviert werden, wobei die ersten synaptischen Signale von der vorhergehenden Schicht eingegeben werden und die zweiten synaptischen Signale von der aktuellen Schicht eingegeben werden;
- wobei die spikenden Neuronen des spikenden neuronalen Netzwerks über Synapsen verbunden sind und wobei sich ein Membranpotential eines spikenden Neurons unter den spikenden Neuronen der aktuellen Schicht auf der Grundlage eines Gewichts der den ersten synaptischen Signalen entsprechenden Synapsen ändert,
- wobei ein Aktivierungsneuron unter den spikenden Neuronen der aktuellen Schicht ein Spikesignal ausgibt, als Reaktion darauf, dass ein Membranpotential des Aktivierungsneurons den Membranpotentialschwellenwert des Aktivierungsneurons überschreitet, und ein erstes synaptisches Signal erzeugt, um spikende Neuronen einer nächsten Schicht (235) anzuregen oder zu hemmen, sowie ein zweites synaptisches Signal auf der Grundlage eines lateralen Hemmungskoeffizienten des Aktivierungsneurons erzeugt, um andere spikende Neuronen als das Aktivierungsneuron in der aktuellen Schicht zu hemmen, wobei ein Wert des lateralen Hemmungskoeffizienten des Aktivierungsneurons auf der Grundlage der Gewichte der Synapsen bestimmt wird, die jedem der spikenden Neuronen der aktuellen Schicht entsprechen.

2. Trainingsverfahren nach Anspruch 1, wobei der Parameter ferner mindestens eines der Folgenden umfasst: den Membranpotentialschwellenwert des spikenden Neurons, die synaptischen Ausgangsgewichte des spikenden Neurons und einen lateralen Hemmungskoeffizienten des spikenden Neurons.

3. Trainingsverfahren nach einem der vorstehenden Ansprüche, wobei das Trainieren ferner das Anpassen mindestens eines der Folgenden umfasst: der Ausgabeaktivität des spikenden Neurons auf der Grundlage des Membranpotential-Reset-Faktors des spikenden Neurons, des lateralen Hemmungskoeffizienten des spikenden Neurons, eines lateralen Abschlagsfaktors des spikenden Neurons und der Ausgabeaktivitäten anderer spikender Neuronen als des spikenden Neurons in einer Gruppe von spikenden Neuronen.

4. Trainingsverfahren nach einem der vorstehenden Ansprüche, wobei das Trainieren ein Ändern eines Membranpotential-Zeitkonstantenwerts von in dem neuronalen Netzwerk enthaltenen spikenden Neuronen auf der Grundlage eines Ergebnisses eines Vergleichs zwischen einer Größe von in das neuronale Netzwerk eingegebenen Eingangssignalen und einem Referenzwert umfasst.

5. Trainingsverfahren nach Anspruch 4, wobei das Ändern ein Erhöhen des Membranpotential-Zeitkonstantenwerts der spikenden Neuronen umfasst, als Reaktion darauf, dass die Größe der Eingangssignale kleiner als ein erster Referenzwert ist; und/oder
wobei das Ändern ein Verringern eines Membranpotential-Zeitkonstantenwerts von spikenden Neuronen umfasst, die in einer ersten Schicht unter den vorherigen Schichten spikender Neuronen enthalten sind, als Reaktion darauf, dass die Größe der Eingangssignale größer als ein zweiter Referenzwert ist.

6. Trainingsverfahren nach einem der vorstehenden Ansprüche, wobei das Bestimmen der Gewichtsregulierungsrate Folgendes umfasst:
- Erhöhen der Gewichtsregulierungsrate, als Reaktion darauf, dass die Summe der Quadrate größer als der Gewichtsreferenzwert ist; und
- Verringern der Gewichtsregulierungsrate, als Reaktion darauf, dass die Summe der Quadrate kleiner oder gleich dem Gewichtsreferenzwert ist.

7. Trainingsverfahren nach einem der vorstehenden Ansprüche, wobei das Trainieren das Regulieren eines Membranpotentialschwellenwerts von Neuronen umfasst, die in dem spikenden neuronalen Netzwerk enthalten sind, basierend darauf, ob die spikenden Neuronen aktiviert sind.

8. Trainingsverfahren nach Anspruch 7, wobei das Regulieren das Erhöhen eines Membranpotentialschwellenwerts eines Aktivierungsneurons unter den spikenden Neuronen mit einer bestimmten Rate umfasst.

9. Trainingsverfahren nach Anspruch 8, wobei das Regulieren das Verringern eines Membranpotentialschwellenwerts der spikenden Neuronen auf der Grundlage einer Anzahl von spikenden Neuronen, die sich ein Rezeptionsfeld in einer vorhergehenden Schicht von spikenden Neuronen teilen, und einer Anzahl von Aktivierungsneuronen, die in der vorhergehenden Schicht enthalten sind, umfasst.

10. Trainingsverfahren nach einem der Ansprüche 7 bis 9, wobei das Regulieren das Erhöhen eines synaptischen Gewichts umfasst, das jedem der in dem spikenden neuronalen Netzwerk enthaltenen spikenden Neuronen entspricht, als Reaktion darauf, dass ein Membranpotentialschwellenwert der spikenden Neuronen kleiner als ein Membranpotentialreferenzwert ist.

11. Trainingsverfahren nach einem der vorstehenden Ansprüche, wobei das Trainieren das Initialisieren mindestens eines der Folgenden umfasst: eines Membranpotentialschwellenwerts und synaptischer Gewichte von spikenden Neuronen, die in einer Schicht des spikenden neuronalen Netzes enthalten sind, auf der Grundlage einer Anzahl von Synapsen, die jedem der spikenden Neuronen entsprechen.

12. Trainingsverfahren nach einem der vorstehenden Ansprüche, wobei das Trainieren das Normalisieren eines Rückpropagierungsfehlers umfasst, sodass ein Aktualisierungswert der synaptischen Gewichte der in dem spikenden neuronalen Netzwerk enthaltenen spikenden Neuronen gleich einem Aktualisierungswert eines Membranpotentialschwellenwerts der spikenden Neuronen ist, wobei der Rückpropagierungsfehler auftritt, wenn der berechnete Verlust an das spikende neuronale Netzwerk rückpropagiert wird.

13. Übergangsloses computerlesbares Speichermedium, auf dem ein Programm gespeichert ist, das Anweisungen umfasst, die, wenn sie von einem Prozessor ausgeführt werden, den Prozessor veranlassen, das computerimplementierte Trainingsverfahren nach einem der vorstehenden Ansprüche durchzuführen.

## Revendications

1. Procédé d'entraînement, mis en œuvre par ordinateur, d'un réseau neuronal à impulsions présent dans un dispositif de reconnaissance permettant de reconnaître une entrée utilisateur à des fins d'authentification de l'utilisateur, comprenant :
- l'application (710) de données d'entraînement à une couche d'entrée (310) du réseau neuronal à impulsions, les données d'entraînement comprenant comme entrées des événements survenant au fil du temps, lesdits événements survenant au fil du temps étant des signaux biologiques de l'utilisateur,
- ledit réseau neuronal à impulsions comprenant ladite couche d'entrée, une couche cachée et une couche de sortie,
- ladite couche de sortie est conçue pour produire un résultat de reconnaissance en tant que valeur de sortie en fonction d'une sortie de la couche cachée ;
- la détermination d'une activité de sortie d'un neurone à impulsions présent dans le réseau neuronal à impulsions en fonction d'activités d'entrée du neurone à impulsions, d'un facteur de réinitialisation du potentiel membranaire du neurone à impulsions et d'un seuil de potentiel membranaire du neurone à impulsions ;
- l'acquisition (720) de la valeur de sortie de la couche de sortie (250) du réseau neuronal à impulsions ;
- l'entraînement (730) du réseau neuronal à impulsions en fonction de la valeur de sortie et d'une valeur souhaitée correspondant aux données d'entraînement,
- ledit entraînement étant réalisé dans le réseau neuronal à impulsions au moyen d'un apprentissage supervisé et comprenant :
- le calcul d'une perte, par la différence entre la valeur de sortie et la valeur souhaitée,
- la rétropropagation de la perte calculée vers le réseau neuronal à impulsions,
- la détermination d'un paramètre des neurones à impulsions présents dans le réseau neuronal à impulsions, en fonction de la perte et en fonction d'une méthode de descente de gradient reposant sur une activité de sortie des neurones à impulsions, ledit paramètre comprenant les poids synaptiques d'entrée des neurones à impulsions ;
- la comparaison de la somme des carrés des poids synaptiques d'entrée d'un neurone à impulsions présent dans le réseau neuronal à impulsions à une valeur de référence de poids ;
- la détermination d'un taux de régulation des poids en fonction du résultat de la comparaison, et
- la régulation du paramètre des neurones à impulsions présents dans le réseau neuronal à impulsions, ladite régulation comprenant la diminution des poids synaptiques d'entrée en fonction du taux de régulation des poids ;
- ledit réseau neuronal à impulsions comprenant une couche précédente (231) de neurones à impulsions et une couche actuelle (233) de neurones à impulsions qui sont activés en fonction de premiers signaux synaptiques et de deuxièmes signaux synaptiques, les premiers signaux synaptiques étant introduits à partir de la couche précédente et les deuxièmes signaux synaptiques à partir de la couche actuelle ;
- lesdits neurones à impulsions du réseau neuronal à impulsions étant reliés par le biais de synapses, et le potentiel membranaire d'un neurone à impulsions parmi les neurones à impulsions de la couche actuelle variant en fonction du poids des synapses correspondant aux premiers signaux synaptiques,
- un neurone d'activation parmi les neurones à impulsions de la couche actuelle produisant un signal d'impulsion en réaction au fait qu'un potentiel membranaire du neurone d'activation dépasse le seuil de potentiel membranaire du neurone d'activation, et générant un premier signal synaptique pour exciter ou inhiber les neurones à impulsions d'une couche suivante (235) et générant un deuxième signal synaptique en fonction d'un coefficient d'inhibition latérale du neurone d'activation pour inhiber les neurones à impulsions autres que le neurone d'activation dans la couche actuelle, la valeur du coefficient d'inhibition latérale du neurone d'activation étant déterminée en fonction du poids des synapses correspondant à chacun des neurones à impulsions de la couche actuelle.

2. Procédé d'entraînement selon la revendication 1, dans lequel le paramètre comprend en outre au moins un des suivants : le seuil de potentiel membranaire du neurone à impulsions, les poids synaptiques de sortie du neurone à impulsions et le coefficient d'inhibition latérale du neurone à impulsions.

3. Procédé d'entraînement selon l'une quelconque des revendications précédentes, dans lequel l'entraînement comprend en outre l'ajustement d'au moins un des éléments suivants : l'activité de sortie du neurone à impulsions en fonction du facteur de réinitialisation du potentiel membranaire du neurone à impulsions, le coefficient d'inhibition latérale du neurone à impulsions, un facteur de décompte latéral du neurone à impulsions et les activités de sortie des neurones à impulsions autres que le neurone à impulsions dans un groupe de neurones à impulsions.

4. Procédé d'entraînement selon l'une quelconque des revendications précédentes, dans lequel l'entraînement comprend la variation d'une valeur de constante de temps du potentiel membranaire des neurones à impulsions présents dans le réseau neuronal en fonction du résultat d'une comparaison entre la grandeur des signaux d'entrée qui sont introduits dans le réseau neuronal et une valeur de référence.

5. Procédé d'entraînement selon la revendication 4, dans lequel la variation comprend l'augmentation de la valeur de constante de temps du potentiel membranaire des neurones à impulsions en réaction au fait que la grandeur des signaux d'entrée est inférieure à une première valeur de référence, et/ou
dans lequel la variation comprend la diminution de la valeur de constante de temps du potentiel membranaire des neurones à impulsions présents dans une première couche parmi les couches précédentes de neurones à impulsions en réaction au fait que la grandeur des signaux d'entrée est supérieure à une deuxième valeur de référence.

6. Procédé d'entraînement selon l'une quelconque des revendications précédentes, dans lequel la détermination du taux de régulation des poids comprend :
- l'augmentation du taux de régulation des poids en réaction au fait que la somme des carrés est supérieure à la valeur de référence de poids, et
- la diminution du taux de régulation des poids en réaction au fait que la somme des carrés est inférieure ou égale à la valeur de référence de poids.

7. Procédé d'entraînement selon l'une quelconque des revendications précédentes, dans lequel l'entraînement comprend la régulation du seuil de potentiel membranaire des neurones présents dans le réseau neuronal à impulsions en fonction du fait que les neurones à impulsions ont été activés ou non.

8. Procédé d'entraînement selon la revendication 7, dans lequel la régulation comprend l'augmentation du seuil de potentiel membranaire d'un neurone d'activation parmi les neurones à impulsions selon un certain taux.

9. Procédé d'entraînement selon la revendication 8, dans lequel la régulation comprend la diminution du seuil de potentiel membranaire des neurones à impulsions en fonction du nombre de neurones à impulsions partageant un champ récepteur dans une couche précédente de neurones à impulsions et du nombre de neurones d'activation présents dans la couche précédente.

10. Procédé d'entraînement selon l'une quelconque des revendications 7 à 9, dans lequel la régulation comprend l'augmentation d'un poids synaptique correspondant à chacun des neurones à impulsions présents dans le réseau neuronal à impulsions en réaction au fait que le seuil de potentiel membranaire des neurones à impulsions est inférieur à une valeur de référence de potentiel membranaire.

11. Procédé d'entraînement selon l'une quelconque des revendications précédentes, dans lequel l'entraînement comprend l'initialisation du seuil de potentiel membranaire et/ou des poids synaptiques des neurones à impulsions présents dans une couche du réseau neuronal à impulsions, en fonction du nombre de synapses correspondant à chacun des neurones à impulsions.

12. Procédé d'entraînement selon l'une quelconque des revendications précédentes, dans lequel l'entraînement comprend la normalisation d'une erreur de rétropropagation de façon qu'une valeur d'actualisation des poids synaptiques des neurones à impulsions présents dans le réseau neuronal à impulsions soit égale à une valeur d'actualisation d'un seuil de potentiel membranaire des neurones à impulsions, ladite erreur de rétropropagation se produisant lorsque la perte calculée est rétropropagée vers le réseau neuronal à impulsions.

13. Support de stockage non transitoire lisible par ordinateur sur lequel est stocké un programme comprenant des instructions qui, lorsqu'elles sont exécutées par un processeur, amènent le processeur à exécuter le procédé d'entraînement mis en œuvre par ordinateur selon l'une quelconque des revendications précédentes.
